Europäisches Patentamt

European Patent Office

Office européen des brevets

(11) Publication number: **0 316 045**
**A2**

## EUROPEAN PATENT APPLICATION

(21) Application number: 88202493.8

(22) Date of filing: 08.11.88

(51) Int. Cl.⁴: **H04N 5/44**

(30) Priority: 12.11.87 US 119603
31.08.88 US 239089

(43) Date of publication of application:
**17.05.89 Bulletin 89/20**

(84) Designated Contracting States:
**DE FR GB IT**

(71) Applicant: **NORTH AMERICAN PHILIPS
CONSUMER ELECTRONICS CORP.
100E 42nd Street
New York N.Y. 10017(US)**

(72) Inventor: **Burdick, William S.**
c/o INT. OCTROOIBUREAU B.V. Prof.
Holstlaan 6
NL-5656 AA Eindhoven(NL)
Inventor: **Bingham, Joseph Peter**
c/o INT. OCTROOIBUREAU B.V. Prof.
Holstlaan 6
NL-5656 AA Eindhoven(NL)
Inventor: **Bugni, Anthony R.**
c/o INT. OCTROOIBUREAU B.V. Prof.
Holstlaan 6
NL-5656 AA Eindhoven(NL)
Inventor: **Phillips, Larry G.**
c/o INT. OCTROOIBUREAU B.V. Prof.
Holstlaan 6
NL-5656 AA Eindhoven(NL)
Inventor: **Darby, Ted Alan**
c/o INT. OCTROOIBUREAU B.V. Prof.
Holstlaan 6
NL-5656 AA Eindhoven(NL)
Inventor: **Naimpally, Saiprasad V.**
c/o INT. OCTROOIBUREAU B.V. Prof.
Holstlaan 6
NL-5656 AA Eindhoven(NL)

(74) Representative: **Minczeles, Roger et al
INTERNATIONAAL OCTROOIBUREAU B.V.
Prof. Holstlaan 6
NL-5656 AA Eindhoven(NL)**

(54) **TV input source identifier.**

(57) The circuit determines whether a video signal is from a video tape player or a broadcast signal source by measuring jitter of the vertical synchronization pulses. In one embodiment, every other time interval between the vertical synchronization pulses is measured and saved as a count, and each count is compared to the preceding count to determine whether sufficient jitter is present to indicate that the video signal is from a local tape player. In another embodiment all intervals between the vertical synchronization pulses are measured and a predetermined number thereof are saved as counts.

The even and odd counts are then analyzed separately, and the extreme count (the most deviant count) of each group is eliminated. With the extremes eliminated, the overall deviation of the counts from an average is determined for each group (even and odd) and such deviations are compared to predetermined data (a threshold) to decide whether jitter is sufficiently large to indicate that the source of the video signal is a local tape player.

In still another embodiment timing data is generated corresponding to the period of at least one selected field in each of a plurality of selected frames. From this timing date, a maximum number is stored that corresponds to the greatest period and a minimum number is stored that corresponds to the least period of the selected fields. The minimum number is subtracted from the maximum number and the difference is compared to a threshold to determine the type of video signal. In an alternate embodiment, numbers corresponding to fields from successive frames are compared by a subtraction and the difference is compared to a threshold in order to make a decision as to the type of video signal. In both of the last two embodiments, the noise level of the video signal is constantly monitored. When the noise is above a threshold, the local signal is generated regardless of the information derived from the timing data.

FIG. 1

## TV INPUT SOURCE IDENTIFIER

### FIELD OF INVENTION

The present invention relates to circuits that determine the type of video signal source and particularly relates to a circuit that determines whether a video signal source is a local tape player, or a broadcast signal source.

### BACKGROUND OF THE INVENTION

A typical home television system often includes a video cassette recorder/player (VCR) and a television, and the broadcast signal is usually an input to the VCR. The VCR output is then applied as an input to the television. When the VCR is not playing, the broadcast signal is transmitted by the VCR to the television so that the television receives both the broadcast signal and a local recorded signal from the same source, the VCR. It is desirable to create a display on the television to indicate whether the video source is a tape or a broadcast signal, but such information is not commonly available at the television. If a viewer is switching back and forth between a live broadcast and a tape, perhaps viewing the tape during commercials, he may forget which source he is watching. It would then be helpful to him for the television to display the identity of the source that he is watching. Such source information might also be useful to enhance the function of other circuits in the television. For example, an identifier signal indicating the type of video signal would enable other circuitry in the television to select the best method for achieving synchronization with the video signal. Also, such identifier signal would be useful in controlling a pay T.V. system.

With the increasing need to determine the type of video signal sources, there arises an increased need for an accurate and reliable method for making this determination. Reliability in producing an identifier signal is hampered by the wide quality range of signals produced by VCRs and by the wide range of signal-to-noise ratios found in T.V. broadcast signals. Thus, a need exists for a circuit that will reliably identify a VCR signal and a T.V. broadcast signal despite the difficulties posed by the expected operating conditions.

### SUMMARY OF THE INVENTION

A video signal from a home VCR may be identified and distinguished from a broadcast signal in the manner described in U.S. Patent 3,944,019.

The present invention aims to attain a similar identification by other and more accurate means and is therefor characterized by comprising:
means for receiving the video signal and for generating timing data corresponding to the synchronization signal of the video signal for at least first and second time intervals between the synchronization pulses;
means for comparing the timing data of at least the first time interval to the timing data of at least the second time interval and producing a comparison signal that corresponds to the amount of jitter in said video signal; and
judgment means responsive to said comparison signal for producing a local signal when said comparison is within a first predetermined range to indicate that the video signal is from a local video playing device and for generating a broadcast signal when said comparison signal is within a second predetermined range to indicate that the video signal is from a broadcast signal source.
Jitter refers here to the difference between the time periods which are located between the synchronization pulses.

In an embodiment the invention provides an apparatus for analyzing a video signal containing a plurality of frames with each frame containing at least one field and each field having a time period and for determining whether the video signal is from a local video playing device or a broadcast signal source, which is characterized by
means for receiving the video signal and for generating timing data corresponding to the period of at least one selected field in each frame of a plurality of selected frames;
storage means for receiving the timing data and storing a maximum number correponding to the greatest period of any one of the selected fields in the selected frames and for storing a minimum number corresponding to the least period of any one of the selected fields in the selected frames; and
judgment means for comparing the maximum number to the minimum number and producing a local signal when the difference between the maximun number and the minimum number is greater than or equal to a predetermined threshold to indicate that the video signal is from a local video playing device and for generating a nonlocal signal when the difference is less than the predetermined threshold to indicate that the video signal is from a broadcast signal source.

### BRIEF DESCRIPTION OF THE DRAWINGS

The present invention may best be understood by reference to the following Detailed Description of preferred embodiments when considered in conjunction with the Drawings in which:

FIGURE 1 is a circuit diagram of a TV input source identifier using discrete elements for monitoring jitter and illustrating one embodiment of the present invention;

FIGURE 2 is an alternate embodiment of the identifier using a microprocessor.

FIGURE 3 is a schematic block diagram of the T.V. input source identifier including a noise override circuit;

FIGURE 4 is a schematic block diagram of a VCR detector circuit that compares the maximum period to the minimum period of corresponding fields in a selected number of frames of a video signal; and

FIGURE 5 is a schematic block diagram of a VCR detector circuit that compares the periods of corresponding fields in successive frames of a video signal.

## DETAILED DESCRIPTION

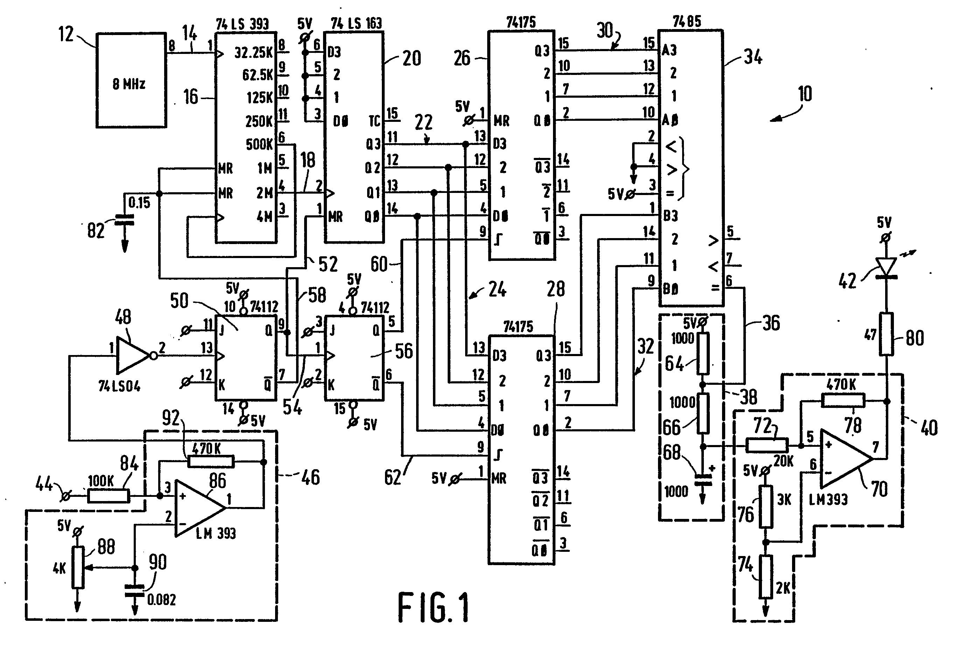

Referring now to the Drawings in which like reference characters designate like or corresponding parts throughout the several views, there is shown in FIGURE 1 a TV input source identifier 10 that includes a clock 12 that produces an 8 megahertz clock signal. This signal appears on pin 8 and is applied through line 14 to pin 1 of a counter 16, part number 74LS393. A 2 megahertz signal is produced by the counter 16 and applied through pin 4 and line 18 to a pin 2 on a second counter 20 whose function is to count the 2 megahertz pulses and, thus, produce a count corresponding to a time interval. The count is output on lines 22 (pins 11-14) and is received by a latch 26 on pins 4, 5, 12 and 13. The output of counter 20 is also received by a latch 28 on pins 4, 5, 12 and 13. Latches 26 and 28 are both part number 74175 latches. The count appearing on lines 22 is binary count with a 1 megahertz frequency appearing on pin 14, a 0.5 megahertz frequency on pin 13, a 0.25 megahertz frequency on pin 12 and a 0.125 megahertz frequency appearing on pin 11.

In the case of both latches 26 and 28, their output appears on pins 2, 7, 10 and 15. The output of latch 26 is applied to pins 10, 12, 13 and 15 of a comparator 34, part number 7485, and the output of latch 28 is applied to pins 9, 11, 14 and 1 of the comparator 34. The output of the comparator 34 appears on line 6 and it is applied through line 36 to a low pass filter 38 whose output is applied to a comparator 40. If the contents of the latches 26 and 28 are identical, the output on pin 6 will be low. The output of comparator 40 controls an LED 42 so that the LED 42 is on when the output on pin 6 is low, and it is off when the output on pin 6 of comparator 34 is high.

Referring now to the lower left-hand side of the circuit diagram shown in FIGURE 1, there is shown circuitry for receiving the vertical synchronization pulses of a television set. The vertical synchronization pulses have been isolated by a conventional synch separator circuit and are applied at junction 44 to a comparator 46. The output of the comparator 46 is applied through an inverter 48 to a flip-flop 50. The non-inverted output of the flip-flop 50 is applied through line 52 to pin 1 of the counter 20 and through line 54 to pin 1 of another flip-flop 56. The inverted output of the flip-flop, appearing on pin 7, is applied through a line 58 to pins 12 and 2 of the counter 16. Also, the non-inverted output of flip-flop 56 appears on pin 5 and is applied through line 60 to pin 9 of the latch 26, and the inverted output of flip-flop 56 appears on pin 6 and is applied through line 62 to pin 9 of latch 28.

In operation, the basic function of the circuit shown in FIGURE 1 is to place numbers or counts in latches 26 and 28 that correspond in magnitude to every other time interval between vertical synchronization pulses (alternate time intervals). To produce this count, a clock signal is provided by the clock 12. This 8 megahertz clock signal is applied to counter 16 which functions to divide the frequency by four and produce a 2 megahertz frequency on line 18 and these pulses are counted by the counter 20. The two counters 16 and 20 are controlled by flip-flop 50 so that the counts appearing counter 20 correspond to every other time interval between vertical synchronization pulses. For example, assume that a vertical synchronization pulse is receiving by flip-flop 50 and that the non-inverted output on pin 9 goes high and the inverted output on pin 7 goes low. A high input is thus applied to counter 16 which causes it to count and a low input is applied to counter 20 which also causes it to count. For the time interval following the first synchronization pulse, both counters 16 and 20 will count. When the second synchronization pulse is received by the flip-flop 50, a low signal will be applied to counter 16 and a high signal will be applied to counter 20 causing them both to clear and, at the same time, the counter 20 will be read by one of latches 26 and 28. Both counters 16 and 20 are held clear until the third synchronization pulse is received, and whereupon both of the counters 16 and 20 will begin counting again. When the fourth synchronization pulse arrives, counter 20 is read again and both counters 16 and 20 are cleared. This procedure repeats so that the counter 20 is constantly counting for the time period of every other time interval and is held clear during the remainder of the time periods between synchronization pulses.

Flip-flop 56 is controlled by the non-inverted output of flip-flop 50 and its function is to control which of latches 26 and 28 will read the counter 20. In a sense the flip-flop 56 is operating at one-half the speed of the flip-flop 50, and the non-inverted output of flip-flop 56 controls latch 26 and its inverted output controls latch 28. When the non-inverted output goes high, latch 26 will read counter 20. When the flip-flop 56 is actuated and the inverted output goes high, latch 28 will read counter 20. In this manner, latches 26 and 28 alternatively read counter 20 so that the latch with the oldest count will read the new count from the counter 20. Thus, latches 26 and 28 always contain counts corresponding to every other one of the most recent time intervals between the vertical synchronization pulses. The comparator 34 constantly compares the contents of latches 26 and 28 and, if the contents are equal, then the output on the equals pin 6 of the comparator 34 will go high and will turn off the LED 42. If the contents of latches 26 and 28 are not equal, the equals pin 6 of the comparator 34 will go low and that signal will turn the LED 42 on.

It will be appreciated that the output of the comparator is applied to low pass filter 38 which comprises two 1000 ohm resistors 64 and 66 and a 1000 picofarad capacitor 68 connected in series between a 5 volt power source and common. The input to the filter 38 is applied between the resistors 64 and 66 and the output of the filter is taken between resistor 66 and the capacitor 68. In this construction, the low pass filter will require the signal on line 36 to change and remain the same for about four picture frames before it will pass the changed signal to actuate the comparator 40. Thus, the low pass filter 38 will prevent the LED 42 from flashing on and off if the output on pin 6 is changing rapidly (more than once every four frames). By adjusting the components of the low pass filter 38, one may adjust the time of the delay imposed by the filter.

The comparator 40 which receives the output of the low pass filter 38 functions as trigger with hysteresis. The comparator 40 includes an op amp 70 that is part of a chip LM393, and the input of the op amp 70 is received on pin 5 through a resistor 72 from the filter 38. A reference voltage is applied to pin 6 of the op amp 70 and this reference voltage is created by a 3K ohm resistor 76 and a 2K ohm resistor 74 connected in series between a 5 volt source and common. The reference voltage is taken from the junction between the two resistors. A feedback resistor 78, 470K ohms, is connected between the output of the op amp 70 and the input, on pin 5. This feedback resistor 78 creates hysteresis which means that different voltages are required to turn the trigger 40 on and off. That is, the voltage required to trigger "on" is higher than voltage required to trigger "off".

The output of the trigger 40 is applied through a 47 ohm resistor 80 to an LED 42 that is connected in series with a 5 volt power source. Through the combination of the time delay imposed by the low pass filter 38 and the hysteresis imposed by the trigger 40, a circuit is achieved that will produce steady on and off conditions for the LED 42 even through the output on line 36 may be somewhat noisy and will occasionally provide false signals due to camera changes in a broadcast signal.

Referring again to counter 20, it will be noted that only the lowest order bits are applied on lines 22 as the count for latches 26 and 28. Since the time intervals that are being measured are very nearly the same, the higher order bits of the count will always be equal. Thus, it is necessary only to use the low order bits of the counter 20 when generating the counts in latches 26 and 28 that will be compared.

Referring to the counter 16, it will be noted that a 0.15 microfarad capacitor 82 is also connected to the reset pins 2 and 12 thereof. The purpose of this capacitor 82 is to ensure that the clear signal applied to counter 16 is slightly delayed with respect to the clear signal applied to counter 20 on pin 1. This is necessary since counter 20 has a synchronized clear mode of operation. The capacitor 82 would not be necessary is chips having nonsynchronized clears were used.

Referring to comparator 46 in the lower left side of FIGURE 1, it is appreciated that the comparator is of standard design. The synchronization signal applied at pin 44 passes through a 100K ohm resistor 84 to pin 3 of an op amp 86 which is part of an LM393 chip. Pin 2 of the op amp 86 is provided with a reference voltage by a 4K ohm variable resistor 88 which is connected between a 5 volt power source and common. Pin 2 is also connected to common by a .082 microfarad capacitor 90. A 470K ohm resistor 92 is connected between the output of op amp 86 and pin 3, its input, to produce hysteresis in the usual fashion. In this manner, a flickering of the input to the inverter 48 is minimized and ordinarily prevented.

In FIGURE 1, the circuitry is drawn in a conventional fashion. Pin numbers are located on the outside of the chips adjacent to the pins, and designations or functions are designated within the chip adjacent the pins. A circle on the end of a pin or a line indicates a 5 volt power source and an inverted triangle indicates ground.

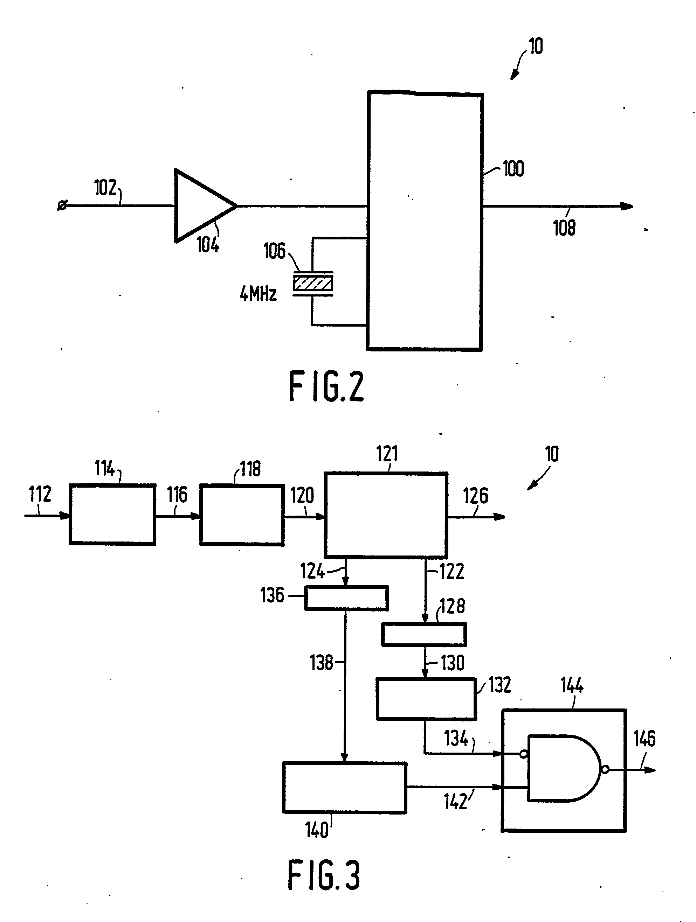

Referring now to FIGURE 2, there is shown an alternate embodiment of the identifier 10 which utilizes a microprocessor 100 that is preferably part of an MC68HC11 microprocessor which could also be used in many televisions to control tuning. Vertical synchronization pulses are applied through line 102 and a comparator 104 as an input to the microprocessor 100, and a crystal 106 is connected to the microprocessor 100 to provide a four megahertz reference for the internal counter. The MC68HC11 microprocessor has a 16 bit onboard counter that will run at one-half the crystal frequency. Thus, the counter within the microprocessor 100 will run at 2 megahertz. Using this feature, the time of each leading edge of the vertical synchronization pulses can be timed to within 0,5 microseconds.

To achieve the desired function essentially equivalent to that of the circuit shown in FIGURE 1, the microprocessor 100 is programmed to provide the appropriate output signals on line 108 to signal either the presence or absence of a sufficient amount of jitter to indicate that the video signal is from a VCR. The basis theory of the program for the microprocessor 100 is to mimic the function of the circuit shown in FIGURE 1 except that a greater number of time intervals will be used to increase reliability and filtering will be accomplished digitally by the program. The method executed in the microprocessor begins by recording a count that corresponds to the time interval between each vertical synchronization pulse. From each of these counts, a nominal count is subtracted to produce a scaled count. Preferably, the nominal vertical count is 33367 of a 2 megahertz clock. The scaled counts are converted to 8 bits for easy math and handling and a predetermined number, such as 20, of the scaled counts are saved. Then, the counts are grouped into even and odd groups so that each group contains a scaled count corresponding to every other time interval in the group. Next, averages for odd scaled counts and even scaled counts are determined. However, in determining such averages, the scaled counts that deviate the most from the other counts in the groups are eliminated and not considered in determining the average. After the average has been determined, a total deviation for the counts of each group is determined. Again, in determining the total deviation, the extremes of each group are not considered. The sum of the odd deviations and the even deviations are then compared to a selected threshold and, if the total deviation is greater than the threshold, the output on line 108 indicates that the signal source is a VCR or tape. If the total deviation of both groups is less than the threshold, the output on line 108 indicates that the signal is a broadcast signal.

The above procedure may be implemented in the microprocessor 100 using the pseudo code listed below.

### Pseudo Code

```
1. Get Interrupt_time;
2. Count: = Interrupt_time - Previous_time;
3. Previous_time: = Interrupt_time;
4. Scaled_count: = Convert_8 bit (count- 33367);
5. Frame (0): = Scaled_Count;
6a. For index in 20 ...1 DO
6b. Frame (index): = Frame (index-1);
6c. End loop;
7. Odd_Sum: = 0;
8. Even_Sum: = 0;
9a. For index in 1...10 DO
9b. Odd_Sum: = Odd_Sum + Frame (2 * index-1);
9c. Even_Sum: = Even_Sum + Frame (2 * index);
9d. End loop;
10. Odd_Average: = Odd_Sum/10;
11. Even_Average: = Even_Sum/10;
12. largest_Odd_Dev: = 0;
13. Largest_Even_Dev: = 0;
14a. For index in 1...10 DO
14b. If Abs (Frame (2 * index-1) - Odd_Average > Largest_Odd Dev
14c. Then Largest_Odd_Dev = Abs (Frame (2 * index-1) - Odd_Average;
14d. Extreme_Odd_No. = Frame (2 * index-1)
14e. End if;
14f. If Abs (Frame (2 * index) - Even_Average) > Largest_Even_Dev
14g. Then Largest_even_Dev: = Abs (Frame (2 * index) - even_average);
14h. Extreme even No = Frame (2 * index)
14i. End if;
15. Adj_odd_ave: = (10 * Odd_Average - Extreme_Odd_No)/9;
16. Adj_even_ave: = (10 * Even_Average - Extreme_No)/9;
17. Sum_odd_dev: = - largest_odd_dev;
18. Sum_even_dev: = - largest_even_dev;
19a. For index in 1...10 DO
19b. Sum_odd_dev: = Sum_odd_dev + Abs (Frame (2* index-1) - Adj_odd_ave);
19c. Sum_even_dev: = Sum_even_dev + Abs (Frame (2 * index) - Adj_even_ave);
20a. If (sum_odd_dev + sum_even_dev) > threshold
20b. Then Put "TAPE";
20c. Else Put "LIVE";
20d. End if:
21. End.
```

The purpose of steps 1-3 in the pseudo code is to calculate a 16 bit number referred to in the pseudo code as count which corresponds to the time between each vertical synchronization pulse. In step 4, this 16 bit count is converted to an 8 bit number called a "scaled" count by subtracting from each count the number 33367. The term "scaled" is used in its broadest sense and it does not necessarily imply a fixed ratio between original values and scaled values. In the two embodiments discussed herein, the scaled count is a remainder produced by a division and a remainder after a subtraction. In these cases there is not a fixed ratio between the count and the scaled count. In steps 5 and 6, the last twenty scaled counts are stored in an array called frame and in steps 9 and 10, an average for all the odd numbers and even numbers stored in frame are determined for odd and even fields. Using the odd average and the even average, the pseudo code in steps 12-14 identifies the extreme odd number and the extreme even number and determines the deviation of the extreme odd number and the extreme even number. To determine the extreme numbers for each group, the difference between each count and the averages are examined. The number corresponding to the greatest absolute value of this difference is stored as the extreme number and the difference is considered the largest deviation.

In steps 15 and 16, the odd and even averages are adjusted to eliminate the influence of the extreme odd number and the extreme even number and these averages are called the adjusted_odd_average and the adjusted_even_average.

In steps 17-19, the total deviation for all of the counts of the two groups is determined using the adjusted_odd_average and the adjusted_even_average. However, the largest odd deviation and the largest even deviation are subtracted out of this calculation so that the extreme_even_number and the extreme_odd_number are, again, not considered in determining the total deviation of each group. In step 20, the sums of the deviations in the even and odd groups are themselves summed and compared to a threshold. If this sum is greater than the threshold, then step 20b requires an output signal indicating that the signal source is "tape". Else, step 20c requires the output to indicate a "live" video signal.

In summary, the present invention determines the type of video signal source by looking at jitter. It would be possible, but very difficult, to determine jitter by examining the horizontal synchronization pulses. A typical jitter in a horizontal synchronization signal would be on the order of 5 nanoseconds. Such jitter could be detected, but it would be complicated and expensive. It is preferred in the present invention to examine the vertical synchronization pulses. The horizontal jitter accumulates and is corrected during vertical synchronization. The effect causes errors in the vertical synchronization signal that are much larger than those in the horizontal synchronization signal. For example, for a typical VCR, jitter in the vertical synchronization signal may be on the order of 2 or 3 microseconds. Detecting jitter using the vertical synchronization pulses is thus easily compared to detecting jitter in the horizontal synchronization signal. Probably, the best method and apparatus for detecting this jitter would be through the use of a microprocessor. In the embodiment described herein, the jitter detection could be performed by the microprocessor that normally is used to tune the television receiver. Thus, except for the programming, the jitter detection function would be free. However, it would also be possible to build a discrete circuit such as disclosed in FIGURE 1 for detecting jitter and judging the results.

FIGURE 3 shows a block diagram of a T.V. input source identifier 10 representing another form of the present invention. In this circuit, a video signal in a television receiver is applied through line 112 to a video preamp 114. The output of the preamp 114 is applied through line 116 to a DC restore 118 and the reconstructed video signal is, then, transmitted by line 120 to a synchronization processor 121. The processor 121 produces a series of pulses known as the vertical drive on output line 122, and these pulses correspond to the vertical synchronization signal of the input video signal appearing on line 112. Thus, the time between the pulses of the vertical drive appearing on line 122 corresponds to the time period of a field in the video signal appearing on line 112.

The processor 121 also produces a signal corresponding to the signal-to-noise ratio on line 124 and produces a sandcastle signal on line 126.

The vertical drive appearing on line 122 is input to a Schmitt trigger 128 whose output appears on line 130 and is applied to a VCR detector 132. Jitter is monitored by the detector 132 in the manner hereinafter described in greater detail and a determination is made as to whether the video signal is from a VCR or from a broadcast signal source. If it is a VCR signal the output of the detector 132 appearing on line 134 is low.

Referring again to the processor 121, three signal levels are produced on line 124 depending on the signal-to-noise ratio. If the signal-to-noise ratio is high, meaning it is essentially noise free, six and one-half (6.5) volts is produced on line 124. When the signal to noise ratio is about 21 db, a ten (10) volt signal is applied to line 124 and when the signal-to-noise ratio is very low (less than about 5 db) indicating a very noisy video signal or no video signal, three tenths (0.3) volt is applied to line 124.

The signal on line 124 is applied through a buffer 136 and line 138 to a comparator 140. The output of comparator 140 is high if 6.5 Volts appear on line 124, but if 0.3 volts or 10 volts appear on line 124, the output of comparator 140 on line 142 is low. The outputs appearing on lines 134 and 142 are applied as inputs to the logic gate 144 which functions as a gate with one inverted input. The input to which line 134 is attached is inverted.

Thus, if 6.5 Volts appear on line 124 indicating a noise free signal, a high signal is applied on line 142 and the output of the logic gate 144 will follow the output of the VCR detector 132. That is, if line 134 goes low, the output of the gate 144 which appears on line 146 will also go low indicating that the video signal is from a VCR. If the output on line 134 goes high, line 146 will also go high indicating that the source is a broadcast television signal.

If either 10 volts or 0.3 volts appear on line 124, then the output of the comparator 140 will go low and it will, thus, force the logic gate 144 to always generate a high signal on line 146. Regardless of the signal appearing on line 134, the output of gate 144 on line 146 will always be high and indicate the presence of a television broadcast signal. In this manner, the circuitry associated with the comparator 140 and the logic gate 144 functions as an override circuit that forces the indication of a television broadcast signal whenever the video signal is noisy (signal-to-noise less than 21 db). If the signal is not noisy, the VCR detector 132 will identify the source of the video signal as described above.

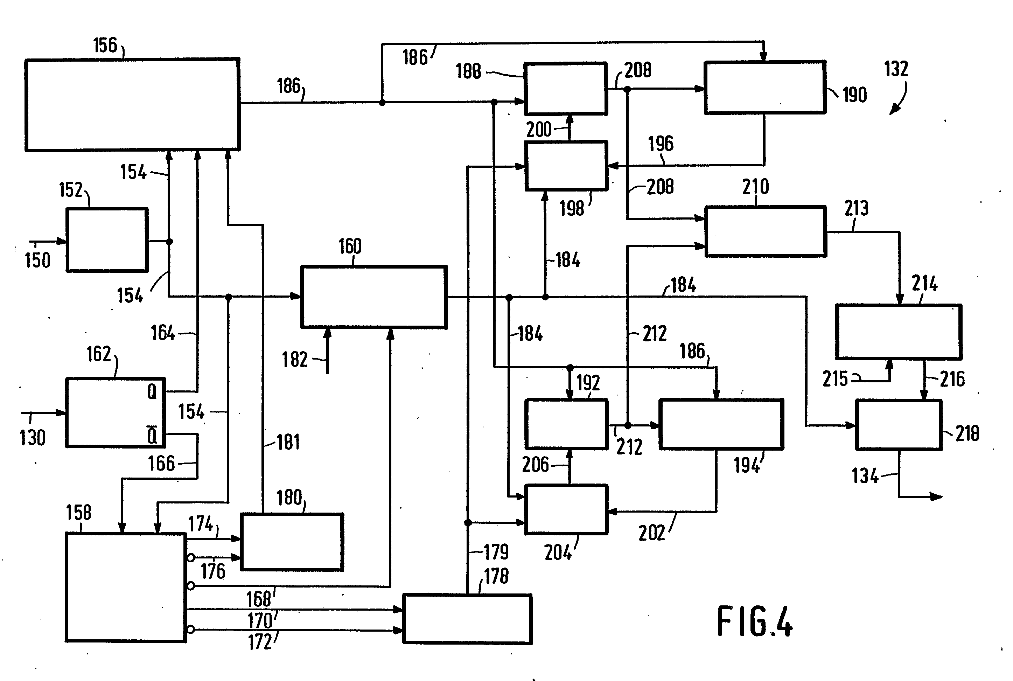

Referring now to FIGURE 4, there is shown a block diagram of one embodiment of the VCR detector 132 which is also shown in FIGURE 3. Referring to the upper left corner of FIGURE 4, a 14.318180 megahertz clock signal is applied on line 150 to an inverting buffer 152, the output of which is applied on line 154 to a 9 bit counter 156. Lines 154 also apply the output of the buffer 152 to a 5 bit shift register 158 and a programmable frame counter 160. In this manner, the counter 156, the shift register 158 and the programmable frame counter 160 receive the same clock signal.

A vertical synchronization pulse signal, also referred to as a vertical drive, is applied by line 130 to an every other field selector 162. The non-inverted output of selector 162 is applied by line 164 as a counter signal to the 9 bit counter 156, and the inverted output of selector 162 is applied on line 166 as a data input to the shift register 158. One function of the selector 162 is to enable the counter 156 to start counting so that it counts during every other field of the video signal. Given the high frequency of the input clock signal, the 9 bit counter will quickly overflow and, at the end of a field when the counter 156 is stopped, an "underflow" number will appear in the counter 156 which corresponds to the time period of a field being observed during the count. In this manner, the counter 156 will count during every other field and is idle during the remaining fields.

The function of the 5 bit shift register is to synchronize the logic operations of detector 132 with the 14.318180 megahertz clock. All of the outputs of the shift register 158 are delayed by one or more clock periods. Thus, the inverted signal on line 166 appears on line 168 delayed by one clock period; on line 170 delayed by three periods; on line 172 delayed by four periods; on line 174 delayed by four periods; and on line 176 delayed by five periods. The signals on lines 168, 172 and 176 are inverted with respect to the input of shift register 158 which appears on line 166. The outputs appearing on lines 174 and 176 are applied to counter clear pulse generator 180 which generates a single clock pulse that is applied through line 181 to the 9 bit counter 156 to clear it. Precisely when this clear pulse is created is unimportant except that it should occur after the functions controlled by the signals on lines 168, 170 and 172.

Line 168 is applied as an input to the programmable frame counter 160 which counts the number of frames. Since the signal appearing on line 168 has already been through the every other field selector 162 and since each frame contains two fields, the signal frequency on line 168 directly corresponds to the frame frequency. A program signal is applied on line 182 to adjust the number of frames counted by the frame counter 160 and, in the preferred embodiment, the signal on line 182 is operable to adjust the frame count in increments of five frames so that the counter will count any increment of five frames between five and eighty frames. When the frame counter counts the selected number of frames, an output signal is applied on line 184 to indicate that such count has been completed.

Referring again to the 9 bit counter 156, its output is applied on nine lines 186 to a maximum number register 188, a comparator 190, a minimum number register 192 and a comparator 194. The number in the maximum number register 188 is output through lines 208 to comparator 190, and the comparator 190 compares the number in the 9 bit counter 156 with the number in the maximum number register 188. It provides a signal on line 196 that will control the maximum number register 188 so that it will store the larger of the two numbers. If the number already in the maximum number register 188 is the larger number, the signal on line 196 that is applied to latch logic 198 will cause register 188 to do nothing. However, if the number in counter 156 is greater than the number in register 188, the control signal on line 196 will cause the latch logic 198 to produce a pulse on line 200, thereby, causing register 188 to store the number from counter 156. In a similar manner, comparator 194 causes register 192 to store the smaller of either the number already stored in register 192 or the number in counter 156. If the counter 156 contains the smaller number, the comparator 194 will produce a signal on line 202 that is applied to latch logic 204 causing it to apply a clock pulse on line 206. This pulse is applied to the minimum number register 192 and causes it to store the number contained in the 9 bit counter 156. If the smaller number already appears in the register 192, the comparator 194 will not cause register 192 to do anything. The output of maximum number register 188 is also applied through lines 208 to a subtracter 210. In a similar manner, the output of mimimum register 192 is applied through lines 212 as an input to the subtracter 210. In the subtracter 210, the minimum number from register 192 is subtracted from the maximum number from register 188 and the difference is applied through lines 213 to a comparator 214. A threshold has been programmed into the comparator 214 through lines 215 and this threshold is compared to the difference appearing on line 213. If the difference is less than the threshold, there is very little jitter, if any, in the input signal and the comparator 214 determines that a broadcast signal is present. In such case, the output of the comparator 214 appearing on line 216 is high and is applied to output latch 218 which will cause a high output on the output line 134. If the difference is greater than or equal to the threshold, the signals on lines 216 and 134 go low.

The timing for the flow of data through the VCR detector 132 is provided by the signals appearing on line 168, 170, 172, 174 and 176. The signal appearing on line 168 is the first signal to change and it is applied to the programmable frame counter 160 which counts the number of frames. The next two signals to change are those appearing on lines 170 and 172. These signals are applied to pulse generator 178 which creates a one clock pulse that is applied simultaneously through line 179 to latch logics 198 and 204. This pulse causes the latch logics 198 and 204 to look at the signal appearing on lines 196 and 202, respectively, and causes the registers 188 and 192 to either hold the number presently in the register or store the number found in 9 bit counter 156. In this manner, the counter 156 counts for a field period and then rests for a field period. At the end of first field when the counter stops counting, an underflow number appears on register 156 and, during the next field while the counter 156 is resting, latch logics 198 and 204 actuate the registers 188 and 192. In this manner, the two registers 188 and 192 are being constantly updated.

When the programmable frame counter 160 counts out to the predetermined number of frames, a high signal appears in line 184. This signal is applied to latch logics 198 and 204 which in turn cause registers 188 and 192 to store whatever number that is contained in the 9 bit counter 156. In this manner, the registers are reset and primed with a number so that they can begin the process of again finding maximum and mimimum numbers in a preselected number of frames. The output on line 184 is also applied to the output latch 218. When a pulse appears on line 184, the output latch 218 looks at the signal on line 216 and produces an output on line 134 accordingly. If the signal on line 216 is low, line 134 goes low. If line 216 is high, line 134 goes high. Latch 218 will hold the output on line 134 until another pulse appears on line 184. In this manner, the output on line 134 is constant during the entire time that registers 188 and 192 are searching for maximum and minimum numbers.

Referring again to comparator 214, it will be appreciated that the threshold that is programmed into this comparator determines whether the video signal is from a VCR or from a broadcast signal source. In the preferred embodiment, a threshold count of 9 is used. This threshold is chosen because even the best home VCR's are typically incapable of producing a signal that is sufficiently jitter free to achieve a count as low as 9 in the comparator 214 and broadcast signals typically produce counts that are much smaller than 9. Thus, it has been found that 9 is a good threshold number for comparator 214. Also, it should be mentioned that fifteen frames are observed in order to find maximum and minimum numbers.

In Applicant's experiments it was determined that fifteen frames was an appropriate number of frames for frame counter 160, and it was observed that for most broadcast signals the difference between the maximum and minimum numbers of registers 188 and 192, respectively, after fifteen frames was less than 2. It is noted that, since a 14.31818 megahertz clock is used, one clock count corresponds to 0.07 microsecond.

It was further observed that for the best home VCR's, the difference between the maximum and minimum numbers after fifteen frames was nine (9) or greater. Thus, assuming that the frame counter 160 is set to count fifteen frames, the threshold of comparator 214 may be set anywhere in the range of 2 to 9, preferably 9. If the difference is less than the threshold, it is an indication that the signal source is a broadcast signal. It will be appreciated that these threshold settings are based on observing 15 frames. If more frames are observed the thresholds would be raised.

It was further observed that as the noise in the broadcast signal was increased, the difference number increased. When the signal to noise ratio reached about 20 db, the difference number occasionally equaled or exceeded 9. Thus, the high SNR comparator 140 is set to override the VCR detector 132 whenever the signal to noise ratio falls to or below about 21 db.

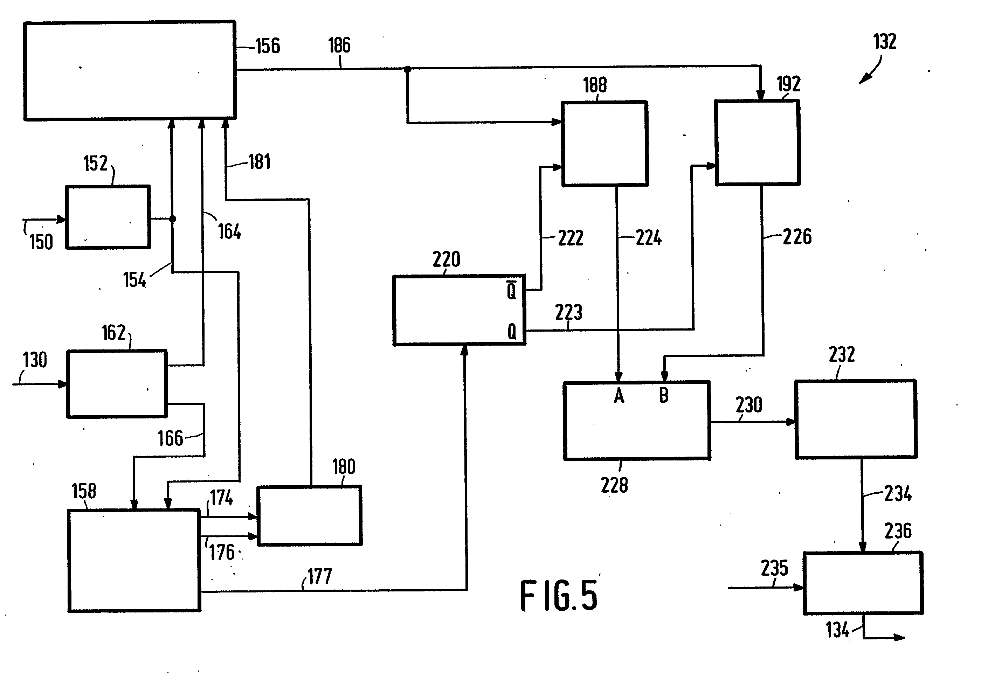

Referring now to FIGURE 5, another embodiment of the VCR detector 132 is shown. In this embodiment, the detector looks at one field from every frame and compares it to the corresponding field of the previous frame. In this embodiment, the inverting buffer 152, the counter 156, the every other field selector 162, the 5 bit shift register 158, and the counter clear pulse generator 180 function in a manner similar to that disclosed above in the discussion concerning FIGURE 4. In this embodiment, the vertical synchronization pulses are applied through the every other field selector 162, through line 166, through shift register 158 and through line 177 to a register selector 220. The leading edges of the signals appearing on line 177 are timed by the shift register 158 to occur prior to the pulse produced by pulse generator 180. The register selector 220 is a divide by two selector and it applies an inverted output to a 9 bit register 188 and applies a non-inverted output to a 9 bit register 192. Registers 188 and 192 correspond to the registers in FIGURE 4 of the same numbers, except that they are controlled differently. In the embodiment of FIGURE 5, the register selector 220 applies signals through lines 222 and 223 and causes the numnber stored in counter 156 to be alternately stored in registers 188 and 192. Thus, one of these two registers always contains the latest complete count from the counter 156 and the other of registers 188 and 192 will always contain the previous count. The outputs of registers 188 and 192 are applied through lines 224 and 226, respectively, to a subtracter 228. The output of register 192 is applied to a subtracter 228 in which the number in register 192 is subtracted from the number in register 188. In this manner, the output of substracter 228 which appears on lines 230 is the difference between the two numbers appearing in registers 188 and 192. The difference signal appearing on lines 230 is applied to an absolute value circuit 232 which converts the signal to an absolute value that is applied through line 234 to a comparator 236. The comparator compares the difference appearing on lines 234 to a threshold that is programmed by a signal appearing on line 235. In the preferred embodiment, the threshold is two. Thus, if the difference signal appearing on lines 230 is greater than or equal to two, comparator 236 produces a low signal on line 134 indicating that the video signal is from a VCR. If the difference is equal to one or zero, the output on line 134 and goes high indicating that the input video signal is a television broadcast signal.

It will be appreciated that the circuit described with respect to FIGURE 4 is more likely to accurately identify a high quality VCR signal since it compares maximum and minimum numbers derived from numerous frames, preferably 20 frames. On the other hand, the circuit shown in FIGURE 5 is less expensive, reasonably reliable, and produces a faster indication of whether the video signal is from a VCR or is a broadcast signal. The reliability of the circuit of FIGURE 5 can be adjusted somewhat by adjusting the threshold of the comparator 236 which is provided by a signal appearing on line 235. This signal is preferably fixed by the designer. In like manner, the threshold used by the comparator 214 of FIGURE 4 may be varied by changing the signal appearing on line 215.

Although particular embodiments have been described in the foregoing detailed description, it will be understood that the invention is capable of numerous rearrangements, modifications and substitutions of parts without departing from the scope of the invention as defined by the appended claims. For example, while it is preferred to observe every other field, one may also chose to observe all fields or fewer than every other field without departing from the scope of the invention.

## Claims

Claim1. An apparatus for analyzing a video signal having at least one synchronization signal that includes a plurality of synchronization pulses and for determining whether the video signal is from a local video playing device or a broadcast signal source, characterized by comprising:

means for receiving the video signal and for generating timing data corresponding to the synchronization signal of the video signal for at least first and second time intervals between the synchronization pulses;

means for comparing the timing data of at least the first time interval to the timing data of at least the second time interval and producing a comparison signal that corresponds to the amount of jitter in said video signal; and

judgment means responsive to said comparison signal for producing a local signal when said comparison is within a first predetermined range to indicate that the video signal is from a local video playing device and for generating a broadcast signal when said comparison signal is within a second predetermined range to indicate that the video signal is from a broadcast signal source.

Claim 2. The apparatus of Claim 1, characterized in that said means for receiving and generating further comprise clock means for measuring every other time interval between synchronization pulses.

Claim 3. The apparatus of Claim 1,.characterized in that said means for receiving and generating further comprise clock means for determining the time intervals between selected synchronization pulses and for generating time counts corresponding in magnitude to said time intervals.

Claim 4. The apparatus of Claim 3, characterized in that said means for comparing further comprise:

means for storing at least two of said time counts; and

a comparator for comparing the magnitude of said two time counts and for generating the comparison signal to correspond to the comparison of said two counts.

Claim 5. The apparatus of Claim 1, characterized in that said means for receiving and generating further comprise:

clock means for determining the time intervals between said synchronization pulses and for generating digital time counts corresponding in magnitude to separate ones of said time intervals;

subtraction means for subtracting a preselected nominal count from each of said time counts to produce a scaled count; and

means for storing a selected number of said scaled counts to constitute said timing data.

Claim 6. The apparatus of Claim 5, characterized in that said means for comparing further comprise:

means for grouping said digital time counts into at least first and seccnd groups and comparing said digital time counts of each group separately from the other group.

Claim 7. The apparatus of Claim 6, characterized in that said means for comparing further comprise means for determining and ignoring a time count of each group that has the greatest deviation from the average of the time counts of the same group.

Claim 8. The apparatus of Claim 1, characterized in that said judgment means further comprise filter means for receiving and filtering the comparison signal and for distinguishing selected frequencies of said comparison signal.

Claim 9. An apparatus for analyzing a video signal having a vertical synchronization signal that includes a plurality of vertical synchronization pulses and for determining whether the video signal is from a local video tape player or a broadcast signal source, characterized by comprising:

means for measuring and recording the time intervals between said vertical synchronization pulses;

means for scaling the magnitude of each of said recorded time intervals to produce scaled times for each recorded time interval;

means for saving a predetermined number of the scaled times;

comparison means for comparing the scaled times to others of the scaled times and producing a comparison signal corresponding to the magnitude of jitter in the video signal; and

judgment means responsive to the comparison signal for producing a local signal when said comparison signal is within a first range indicating that the video signal is from the local video tape player and for producing a broadcast signal when said comparison signal is within a second range indicating that the video signal is from a broadcast signal source.

Claim 10. The apparatus of Claim 9, characterized in that said comparison and judgment means further comprise:

means for calculating an odd average for the odd ones of the saved scaled times;

means for calculating an even average for the even ones of the saved even scaled times;

means for identifying and defining as odd extremes a selected number of odd scaled times having the largest absolute deviations from the odd average;

means for identifying a selected number of even scaled times having the largest absolute deviations from the even average;

means for calculating and adjusted odd average and an adjusted even average of said odd and even scaled times, respectively, wherein the odd and even extremes are removed from the adjusted averages;

means for summing the absolute deviations of the odd scaled times from the adjusted odd average and for removing the effect of the odd extremes from the sum to produce an adjusted odd sum;

means for summing the absolute deviations of the even scaled times from the adjusted even average and for removing the effect of the even extremes from the sum to produce an adjusted even sum; and

means for judging the adjusted odd sum and the adjusted even sum to determine whether the video signal is from a local video tape player or a broadcast signal source.

Claim 11. An apparatus for analyzing a video signal containing a plurality of frames with each frame containing at least one field and each field having a time period and for determining whether the video signal is from a local video playing device or a broadcast signal source, characterized by comprising:

means for receiving the video signal and for generating timing data corresponding to the period of at least one selected field in each frame of a plurality of selected frames;

storage means for receiving the timing data and storing a maximum number corresponding to the greatest period of any one of the selected fields in the selected frames and for storing a minimum number corresponding to the least period of any one of the selected fields in the selected frames; and

judgment means for comparing the maximum number to the minimum number and producing a local signal when the difference between the maximun number and the minimum number is greater than or equal to a predetermined threshold to indicate that the video signal is from a local video playing device and for generating a nonlocal signal when the difference is less than the predetermined threshold to indicate that the video signal is from a broadcast signal source.

Claim 12. The apparatus of Claim 11, characterized in that said means for receiving and generating comprises:

clock means for generating clock pulses at a predetermined frequency;

a counter having a selected number of bits for receiving and counting the clock pulses;

actuator means for starting the counter at the beginning of each selected field and for stopping the counter at the end of each selected field to produce a count corresponding to the period of each selected field; and

storage means for receiving the counts for each selected field and for storing the largest count as the maximum number and for storing the smallest count as the minimum number in the selected frames.

Claim 13. The apparatus of Claim 11, characterized in that said means for receiving and generating comprises:

clock means for generating clock pulses at a predetermined frequency;

a counter having a selected number of bits for receiving and counting the clock pulses;

actuator means for starting the counter at the beginning of each selected field and for stopping the counter at the end of each selected field to produce a count corresponding to the period of each selected field, said counter having a count capacity that is substantially smaller than the number of clock pulses produced by said clock during the period of each field so that the count in said counter at the end of a field period is an underflow number that is representatieve of the field period; and

storage means for reading the counts for each selected field and for storing the largest count as the maximum number and for storing the smallest count as the minimum number in the selected frames.

Claim 14. The apparatus of Claim 11, characterized in that the selected fields are in corresponding locations in their respective frames.

Claim 15. The apparatus of Claim 11, characterized by further comprising means for monitoring the signal-to-noise ratio of the video signal and controlling the production of the local and nonlocal signals according to the signal-to-noise ratio.

Claim 16. The apparatus of Claim 11, characterized by further comprising means for monitoring the signal-to-noise ratio of the video signal and for forcing the production of the nonlocal signal when the ratio is below a predetermined threshold.

Claim 17. The apparatus of Claim 11, characterized in that groups of a selected number of frames are repetitively analyzed by group to repetitively determine whether the video signal is from a local video playing device or is from a broadcast signal source.

Claim 18. The apparatus af Claim 11, characterized in that the number of selected frames is fifteen and the number of selected fields is one.

Claim 19. The apparatus of Claim 11, characterized in that said threshold represents a time period within the range of about one sixth of a microsecond to about one microsecond.

Claim 20. The apparatus of Claim 11, characterized in that said threshold represents a time period of about six tenths of a microsecond.

Claim 21. An apparatus for analyzing a video signal containing a plurality of frames with each frame containing at least one field and each field having a time period and for determining whether the video signal is from a local video playing device or a broadcas signal source, characterized by comprising:

means for receiving the video signal and for generating timing data corresponding to the period of at least one selected field in each frame;

storage means for receiving the timing data and storing at least two numbers corresponding to the periods of the selected fields in two adjacent frames; and

judgment means for comparing the two numbers in the storage means and producing a local signal when the difference between the two numbers is greater than or equal to a predetermined threshold to indicate that the video signal is from a local video playing device and for generating a nonlocal signal when the difference is less than the predetermined threshold to indicate that the video signal is from a broadcast signal source.

Claim 22. The apparatus of Claim 21, characterized in that said storage means comprises:

a first storage for storing one of the two numbers that correspond to field periods and a second storage for storing the other of the two; and

storage control means for controlling the flow of the timing data to store numbers in said first and second storage fields corresponding to field periods from successive consecutive frames.

Claim 23. The apparatus of Claim 21, characterized in that said storage means stores numbers from corresponding fields in the selected frames.

Claim 24. The apparatus of Claim 21, characterized by further comprising means for monitoring the signal-to-noise ratio of the video signal and for controlling the production of the local and nonlocal signals according to the signal-to-noise ratio.

Claim 25. The aaparatus of Claim 21, characterized by further comprising means for monitoring the signal-to-noise ratio of the video signal and for forcing the production of the nonlocal signal when the ratio is below a predetermined threshold.

Claim 26. The apparatus of Claim 21, characterized in that said threshold represents a time period of about one seventh of a microsecond.

Claim 27. In an apparatus for analyzing a video signal and for determining the type of the video signal source, said apparatus producing a local signal to indicate that the video signal is from a local video playing device and producing a nonlocal signal to indicate that the video signal is from a broadcast signal source, the improvement being characterized by comprising:

means for monitoring the signal-to-noise ratio of the video signal and for producing a ratio signal representing the ratio;

comparison means for comparing the ratio signal to a selected threshold and producing a force signal when the ratio signal is less than the threshold; and

override means for forcing the production of the nonlocal signal in response to the force signal, whereby the apparatus indicates that the video signal source is a broadcast signal whenever the signal-to-noise ratio is less than the selected threshold.

FIG.1

FIG.2

FIG.3

FIG.4

FIG.5

EP 0 316 045 A2

4-IV-PHA 40519C